# EUROPEAN PATENT SPECIFICATION

(11) **EP 2 019 526 B1**
(45) Date of publication and mention of the grant of the patent: **01.02.2012**
(21) Application number: 08075621.6
(22) Date of filing: 10.07.2008
(51) Int. Cl.: H04L 12/58, H04L 29/06, H04M 1/725

(54) **Hand-Held Mobile Communications Device Acquiring Filtered Information**
Tragbares Mobilkommunikationsgerät zur gefilterten Informationserfassung
Dispositif de communication mobile portatif pour l'acquisition d'informations filtrée

(30) Priority: 11.07.2007 US 776341
(43) Date of publication of application: 28.01.2009
(73) Proprietor: Acer Incorporated, Hsi Chih City, Taipei Hsien (TW)
(72) Inventor: Maskatia, Arif, Hsi-Chih City Taipei Hsien 221 (TW); Chen, Tse-Min, Hsi-Chih City Taipei Hsien 221 (TW); Hsu, Yin-Hsong, Hsi-Chih City Taipei Hsien 221 (TW)
(74) Representative: Seitz, Holger Fritz Karl

(56) References cited:
- EP-A1- 1 753 214
- WO-A2-01/65335
- US-A1- 2003 046 421
- US-A1- 2003 190 909
- US-A1- 2006 133 340

## Description

### BACKGROUND OF THE INVENTION

### 1. Field of the Invention

The invention relates to a mobile information providing method, more particularly to a method for acquiring information, which is implemented in a hand-held mobile communications device.

### 2. Description of the Related Art

In this era when developments of Internet and wireless communications technologies flourish, use of a handset to send and receive e-mail has become one of the channels to obtain latest information. In order to facilitate reception of e-mail and to block spam mail, more and more telecommunications service providers provide push mail services, and push mail has recently become a popular subject for discussion.

With the so-called push mail, after the user has set relevant rules or conditions, such as subjects of the mail to be received, or senders of the mail to be received, in a mail server, when contents of an e-mail message received by the mail server comply with the preset rules, the mail server will automatically send a backup copy of the mail to a device of the user, such as a handset or a personal computer. Therefore, the user can have the latest e-mail without having to go through such troublesome procedures as accessing the Internet, inputting his/her account number and user password, etc.

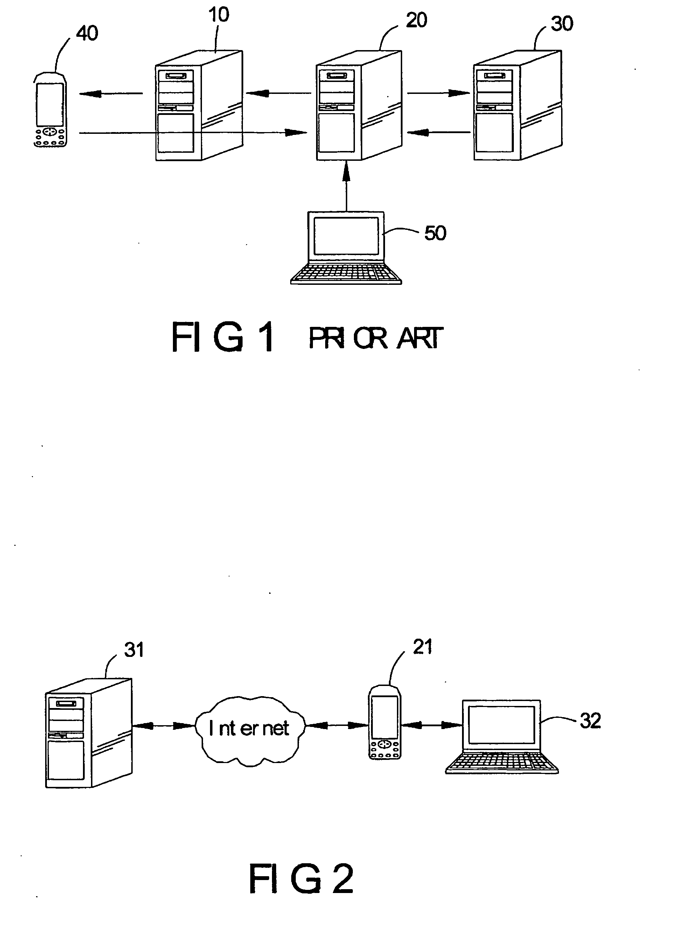

Figure 1 depicts a push mail service system developed by a company named Research In Motion (RIM) in Canada using the push mail technology. The system provides a push mail server 20 connected to a telecommunications service provider 10 having a cooperative relation with said company, and various mail servers 30 (only one is exemplified). When a user subscribes to a push mail service from the telecommunications service provider 10, and the user has his/her handset 40 loaded with relevant software for the push mail server 20 or the user uses an electronic device supplied by RIM, the user can link up with the push mail server 20 through a personal computer 50 to set parameters of the mail to be received by the handset 40, such as subjects of the mail, senders of the mail, etc. Thereafter, the push mail server 20 will check and screen the e-mail on the mail server 30 according to the rules preset by the user regularly, convert those e-mail messages that comply with the user' s preset rules to a specific format suitable for reception by the user' s handset 40, and transmit the same to the user's handset 40 through the telecommunications service provider 10.

However, there exist the following problems with the aforesaid push mail service system:
1. The push mail service provider has to invest manpower and time resources to maintain the push mail server 20;
2. Subscribing to the push mail service involves payment of an extra fee to the provider of the push mail server 20; and
3. Since the e-mail for the user is received and screened by the push mail server 20, and is converted to a suitable format by the push mail server 20 before being sent to the user's handset 40, security issues may arise.

US 2006/133340 discloses a system of filtering messages in an information server, and subsequently a mobile device receives partial content from messages which have passed the user-definable filter. US2003/190909 describes an electronic mail receipt processing method including the step of determining whether or not any one of character lines registered at a character line memory beforehand is contained in the title or the text of a received electronic mail, and the step of executing preselected processing if the character line is contained in the title or the text of the received mail.

### SUMMARY OF THE INVENTION

Therefore, the object of the present invention is to provide a method for acquiring information, and a hand-held mobile communications device implementing the method which can overcome the above drawbacks of the prior art.

According to one aspect of the present invention, a method for acquiring information is adapted to be implemented in a hand-held mobile communications device so as to access information in a remote information server through the Internet. The method includes: (A) acquiring partial content of information from the information server at predetermined times; (B)filtering the acquired partial content according to a filtering rule; and (C) according to the filtering result, downloading information that complies with the filtering rule, and according to a user setting, displaying one of the information that complies with the filtering rule and a notification message relating to the information that complies with the filtering rule.

According to another aspect of the present invention, a hand-held mobile communications device is adapted to access information in a remote information server through the Internet. The hand-held mobile communications device includes a communications unit and a processing unit. The communications unit is for communicating with the information server. The processing unit is for acquiring partial content of information from the information server at predetermined times through the communications unit, for filtering the acquired partial content according to a filtering rule, for downloading information that complies with the filtering rule according to the filtering result, and for selectively displaying one of the information that complies with the filtering rule and a notification message relating to the information that complies with the filtering rule according to a user setting.

### BRIEF DESCRIPTION OF THE DRAWINGS

Other features and advantages of the present invention will become apparent in the following detailed description of the preferred embodiment with reference to the accompanying drawings, of which:
Figure 1 is a schematic diagram of the system architecture of a conventional push mail service system;
Figure 2 is a schematic diagram of a system for the preferred embodiment of a method for acquiring information according to the present invention;
Figure 3 is a block diagram of the internal hardware architecture of the preferred embodiment of a hand-held mobile communications device according to the present invention;
Figure 4 is a flowchart of a mail information search using the preferred embodiment of the hand-held mobile communications device;
Figure 5 is a flowchart to illustrate preliminary screening of electronic mail in the preferred embodiment;
Figure 6 is a flowchart of an initialization procedure conducted for the preferred embodiment of the hand-held mobile communications device through a personal computer;
Figure 7 is a schematic diagram showing a "Set Up an E-mail Account" screen in the preferred embodiment;
Figure 8 is a schematic diagram showing an "Add a New Account" screen in the preferred embodiment;
Figure 9 is a schematic diagram showing an "Add a POP3 Account" screen in the preferred embodiment;
Figure 10 is a schematic diagram showing an "Add an iNotes Account" screen in the preferred embodiment;
Figure 11 is a schematic diagram showing an "Add a Google Mail Account" screen in the preferred embodiment;
Figure 12 is a schematic diagram showing a "Set Up Mail Filter" screen in the preferred embodiment;
Figure 13 is a schematic diagram of a home page screen on the hand-held mobile communications device in the preferred embodiment;
Figure 14 is a schematic diagram showing contents of an e-mail displayed on a display screen of the hand-held mobile communications device in the preferred embodiment;
Figure 15 is a schematic diagram of another home page screen on the hand-held mobile communications device in the preferred embodiment;
Figure 16 is a schematic diagram of a "Check Mail Schedule" screen in the preferred embodiment;
Figure 17 is a schematic diagram of a "Mobile Mail Filter" screen in the preferred embodiment;
Figure 18 is a schematic diagram of another "Mobile Mail Filter" screen in the preferred embodiment;
Figure 19 is a schematic diagram of a "Search Mail" screen in the preferred embodiment;
Figure 20 is a schematic diagram of a "Mail Account" screen in the preferred embodiment;
Figure 21 is a schematic diagram of a "Mail Account Settings" screen in the preferred embodiment;
Figures 22-24 are schematic diagrams of "POP3 Account Settings" screens in the preferred embodiment;
Figure 25 is a schematic diagram of an "iNotes Account Settings" screen in the preferred embodiment; and
Figure 26 is a schematic diagram of a menu screen including options of "Filter," "Mail Account," "Check Mail Schedule," and "Backup/Save" in the preferred embodiment.

### DETAILED DESCRIPTION OF THE PREFERRED EMBODIMENT

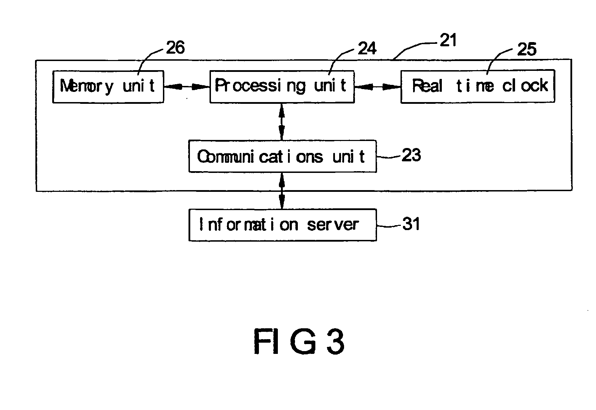

Referring to Figures 2 and 3, the preferred embodiment of a hand-held mobile communications device 21 according to the present invention is shown to be able to connect with various remote information servers 31 (only one is exemplified) through the Internet so as to access information in the information servers 31.

In this embodiment, the information server 31 is a mail server, such as the existing Exchange Mail Server, POP3/SMTP Mail Server, Gmail (Google mail) Server, and iNotes Server developed by IBM. In addition, the hand-held mobile communications device 21 of this embodiment is a smart phone having a network accessing function, such as a mobile phone or a PDA phone supporting a wireless communications protocol, e.g., the GPRS (General Packet Radio Service), the WCDMA (Wideband Code Division Multiple Access), the CDMA2000 or the Wi-Fi, and an operating system capable of executing information downloading and reading functions, such as Win CE5.0.

As shown in Figure 3, the hand-held mobile communications device 21 has a conventional hardware architecture which includes a communications unit 23, a processing unit 24, a real time clock 25, and a memory unit 26. The invention can be implemented with conventional hand-held mobile communication device 21, avoiding altering the hardware thereof.

The communications unit 23 can be connected to the Internet based on, for example, GPRS, WCDMA, CDMA 2000, or Wi-Fi protocols to permit wireless transmission with the information server 31. The real time clock 25 provides time information. An independent power source (not shown) of the hand-held mobile communications device 21 supplies power to the real time clock 25 so as to ensure that the real time clock 25 can still operate even when the hand-held mobile communications device 21 is turned off.

The processing unit 24 not only can execute voice communication, but can also receive filtering rules input from users. The processing unit 24 filters the mails received from the information server 31 according to the predetermined filtering rules. When there are new mails that pass through the filtering rules, the processing unit 24 notifies the user. In addition, the hand-held mobile communications device 21 is loaded with a proprietary mobile mail application program which can control the aforementioned components, and execute the following steps.

The proprietary application program allows the user to set the interval for checking e-mail. Therefore, the application program triggers the processing unit 24 to access the e-mail in the information server 31 at preset intervals according to the timing of the real time clock 25.

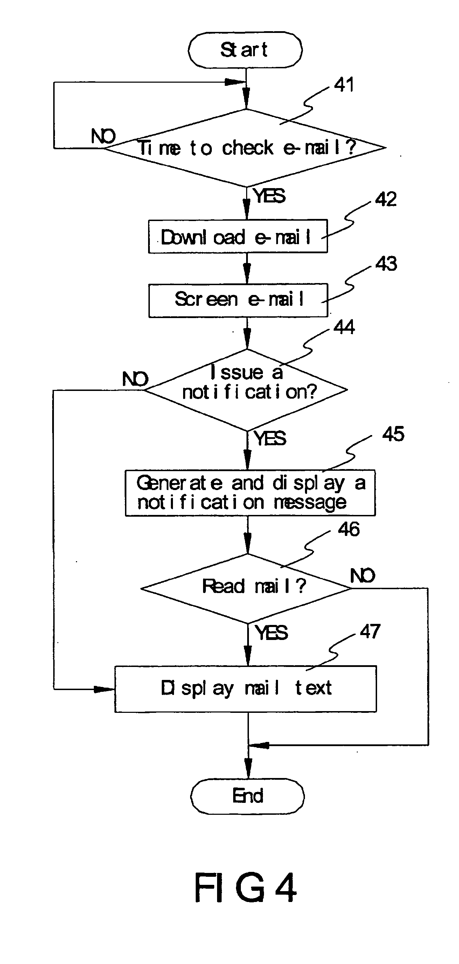

Therefore, in step 41 of Figure 4, when the mobile communications device 21 is in a standby mode, the application program will not trigger the processing unit 24 to access the e-mail in the information server 31 until the checking e-mail interval has come. At this time, in step 42, the processing unit 24 acquires partial content, such as subject, sender or partial text, of e-mail from the information server 31 through the communications unit 23 and stores the same in the memory unit 26.

In an example where the information server 31 is a POP3 mail server, when the POP3 mail server transmits e-mail to the hand-held mobile communications device capable of receiving and sending e-mail, it will also transmit a unique identifier (UID for short) to the hand-held mobile communications device. Therefore, a conventional hand-held mobile communications device capable of receiving and sending e-mail from and to a POP3 mail server is generally provided with a unique identifier database (not shown) for recording unique identifiers of received e-mail. Before downloading e-mail, the conventional hand-heldmobile communications device will request the information server 31 to send thereto the unique identifiers of all the e-mails received thereby, and inspect whether each of the unique identifiers has been recorded in the unique identifier database. E-mail whose unique identifier is not recorded will be regarded as new e-mail and downloaded.

However, as the information server 31 will have stored a large amount of e-mail therein with the passage of time, the mere downloading of the unique identifiers (30∼40K) of the e-mails will take up a lot of bandwidth and time. Moreover, after inspection of the unique identifiers of the downloaded e-mails, it is often found that only some of the e-mails are new e-mails that need to be downloaded. Thus, the conventional hand-held mobile communications device wastes network bandwidth and processing time, and its power consumption is also considerable.

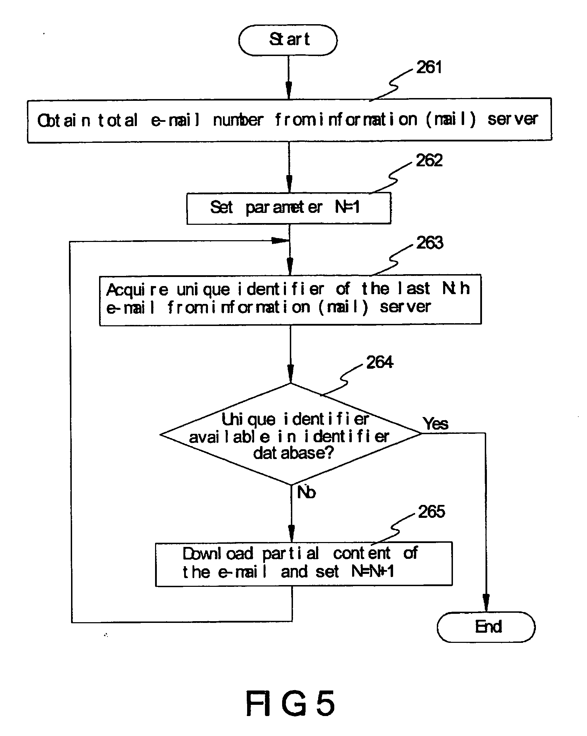

Accordingly, in this embodiment, in order to save network bandwidth and storage space of the memory unit 26, as well as to reduce power consumption of the hand-held mobile communications device 21, when the hand-held mobile communications device 21 is going to acquire e-mail in the information server 31 (e.g., a POP3 mail server), as shown in step 261 in Figure 5, the processing unit 24 of the hand-held mobile communications device 21 will first request the information server 31 (POP mail server) to report a total number of e-mails (e.g., 1002 e-mails) received thereby. After the processing unit 24 receives the total e-mail number reported by the information server 31 (mail server), in step 262, the processing unit 24 sets a parameter N=1, and proceeds with step 263 to request the information server 31 (mail server) to send the unique identifier (UID) of the last Nth e-mail (i.e., the 1002nd e-mail) thereto. Subsequently, in step 264, the processing unit 24 inspects whether the unique identifier is present in the unique identifier database (which is generally provided in the memory unit 26, not shown) thereof. If the unique identifier is present, this indicates that there is no new e-mail in the information server 31 (mail server), and the e-mail retrieving flow is thus ended. Otherwise, in step 265, the partial content of the e-mail is downloaded, N is set to be equal to N+1 (i.e., corresponding to the 1001st email), and the aforesaid steps 263∼265 are repeated until it is found by inspection that the unique identifier of the last Nth e-mail has been recorded in the unique identifier database (which indicates that the hand-held mobile communications device 21 has received the last Nth e-mail and those before it). Hence, new e-mail in the information server 31 can be easily inspected and downloaded without the need to retrieve the unique identifiers of all the e-mails stored in the information server 31 for comparison one by one, thereby providing preliminary screening of the e-mail. As a result, the bandwidth and time for downloading the unique identifiers can be reduced, and since there is no need to inspect a large number of unique identifiers, power consumption of the hand-held mobile communications device 21 can also be saved.

Certainly, the above method is merely directed to POP3 mail servers or other mail servers providing unique identifiers of e-mail. For more powerful mail servers that can provide search/query functions, e.g., IBM Domino mail server or the like, since the IBM Domino mail server can allow setting of mail accessing time, the hand-held mobile communications device 21 according to this preferred embodiment can send requests to the IBM Domino mail server at predetermined times for transmission of partial content of e-mail received by the IBM Domino mail server within a certain period of time. For instance, the hand-held mobile communications device 21 inquires the IBM Domino mail server at 10:00 a.m. about whether new e-mail was received after 9:30 a.m. If new e-mail is available, partial content of the new e-mail is downloaded. After half an hour, i.e., at 10:30 a.m., the hand-held mobile communications device 21 inquires the IBM Domino mail server again about new e-mail received after 10:00 a.m. If new e-mail is available, partial content thereof is downloaded. The hand-held mobile communications device 21 conducts preliminary e-mail screening by means of such inquiry scheme.

After step 42 is ended, in step 43, according to the filtering rules preset by the user, the processing unit 24 screens the acquired partial content (of the e-mail), e.g., the senders, the subjects, or partial text of the e-mail are screened, to rule out unwanted e-mail, and downloads the e-mail that complies with the preset filtering rules according to the filtering result for temporary storage in the memory unit 26.

Then, step 44 is carried out to determine whether or not to send a notification to alert the user based on a previous setting by the user. For instance, if the setting of the user is to issue a notification before the user decides whether or not to read the mail, step 45 is performed to generate and display a notification on a screen of the hand-held mobile communications device 21 to notify the user of receipt of new e-mail. Then, in step 46, the processing unit 24 waits for the user to issue a read-mail command and, whereupon, carries out step 47 to read the mail from the memory unit 26 and display the mail on the display screen of the hand-held mobile communications device 21. On the contrary, if the user's previous setting in step 44 is to read the mail directly, a notification will not be issued, and the flow skips to step 47 to enable the processing unit 24 to read the mail from the memory unit 26 directly and to display the mail on the screen of the mobile communications device 21.

The above is a brief description of the flow of the application program in this embodiment. The method of use and the operational flow of the hand-held mobile communications device 21 will now be described in detail in the succeeding paragraphs.

Referring to Figure 2, before the mobile mail function of the hand-held mobile communications device 21 can be used, an initialization procedure with respect to the hand-held mobile communications device 21 has to be conducted through a personal computer 32.

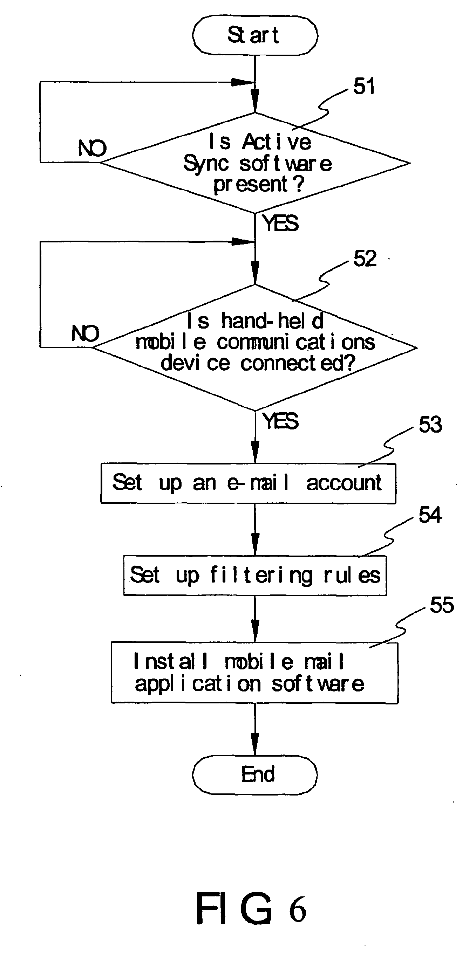

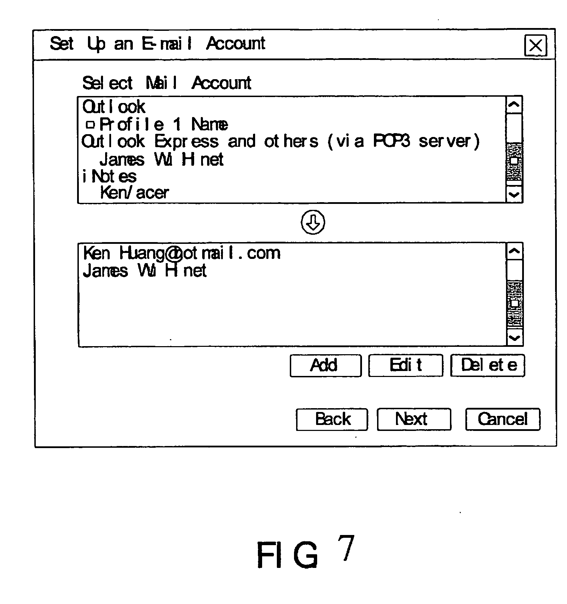

Referring to Figure 6, in step 51, before commencement of the initialization procedure, the personal computer 32 is enabled to inspect whether the hand-held mobile communications device 21 has installed therein software (e. g. , the conventional Active sync software) that allows access to the hand-held mobile communications device 21 by the personal computer 32. After confirming the presence of such software, in step 52, the personal computer 32 inspects whether the hand-held mobile communications device 21 is connected to the personal computer 32. If yes, the flow goes to step 53, in which a "Set Up an E-mail Account" screen as shown in Figure 7 is displayed on the personal computer 32. In the upper text box of the screen, there is shown mail server account information (Profile 1 Name, Profile 2 Name, James Wu Hinet,... etc.) of a mail handler (e.g., Outlook or Outlook Express) in the personal computer 32 available for the user's selection and addition to the lower text box of the screen so as to set the mail server to be searched.

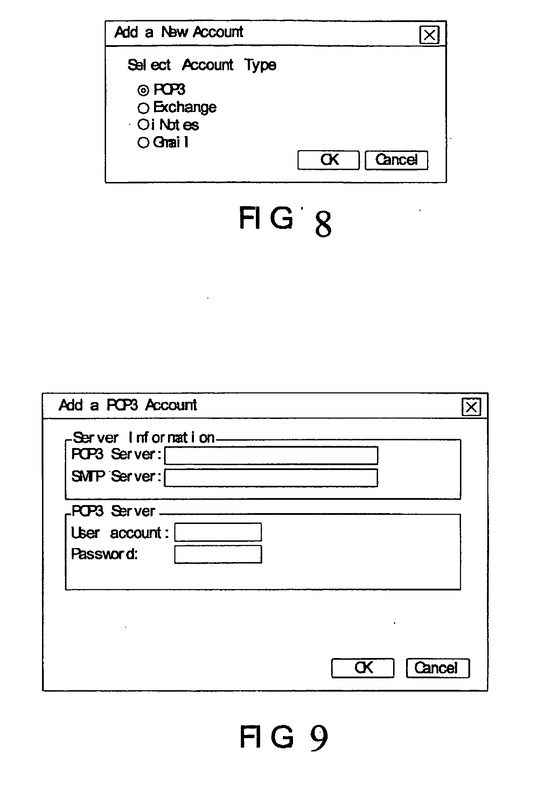

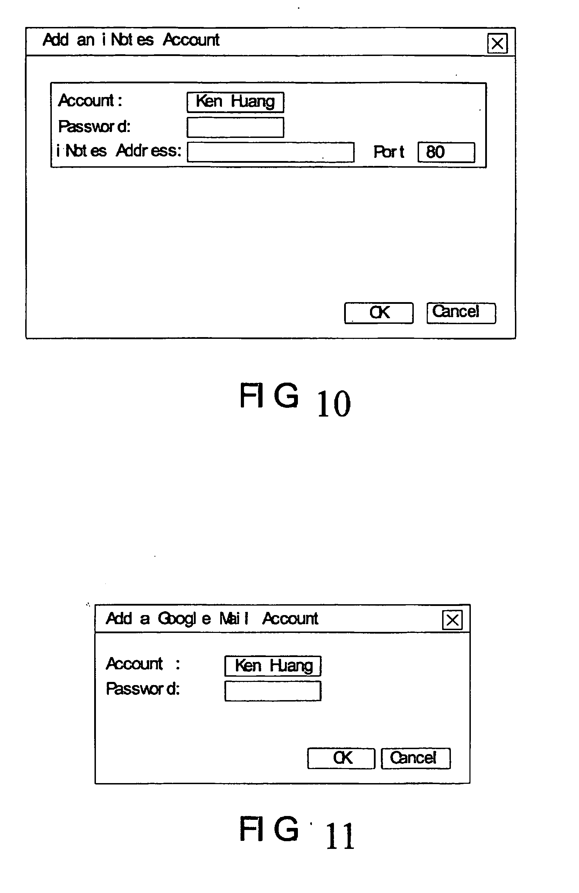

At the same time, command options of "Add," "Edit," "Delete," etc., are displayed at a lower portion of the screen. When the user selects the "Add" command option, a screen entitled "Add a New Account" such as that shown in Figure 8 will appear, listing a number of mail server accounts, e.g., POP3, Exchange, iNotes, and Gmail, for the user's selection. When the user selects "POP3," a screen entitled "Add a POP3 Account" as shown in Figure 9 will appear to allow the user to set relevant information of the mail server (incoming mail server POP3 and outgoing mail server SMTP), such as server address, user account and password. When the user chooses "iNotes" or "Gmail, " on the screen of Figure 8, an "Add an iNotes Account" screen as shown in Figure 10, or an "Add a Google Mail Account" screen as shown in Figure 11, will appear to allow the user to input information such as mail account and password or mail address (for iNotes). After the user has finished inputting such information and has clicked on the "OK" option, the personal computer 32 will inspect the accuracy of the data inputted by the user before proceeding with the search for the newly added mail account. After locating the mail account, the mail account will be added to the lower text box of the screen of Figure 7. In addition, the user can also choose "Edit" or "Delete" on the screen of Figure 7 to edit the mail account data or delete the mail account.

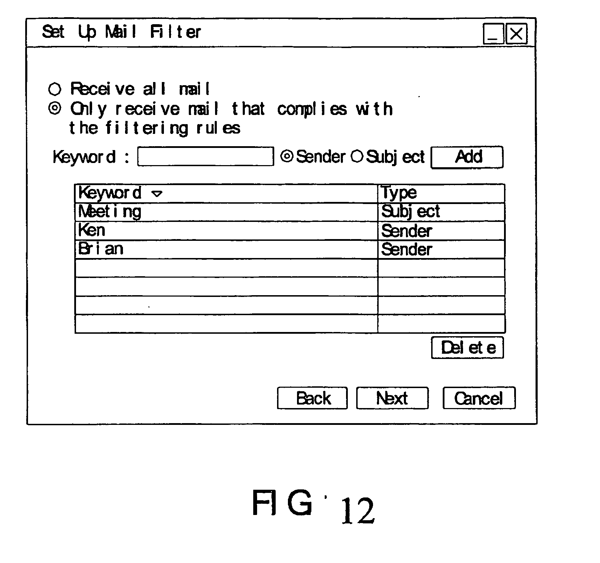

After the user has set the mail account in the "Set Up an E-Mail Account" screen and selected the "Next" command option thereon, in step 54, a screen entitled "Set Up Mail Filter" as shown in Figure 12 will appear to allow the user to set filtering rules. The user can enter one or more keywords in the "keyword" box on the screen, and choose the "sender" or "subject" option button to relate the entered keyword/keywords to the sender or the subject of an e-mail message. By clicking the "Add" option, the keyword/keywords can be added to the filtering rule box at the lower part of the screen. The setup data will be recorded in the processing unit 24. After the settings are completed, in step 55, the personal computer 32 executes a software install procedure with respect to the hand-held mobile communications device 21 to install another application program for executing a mobile mail service into the hand-held mobile communications device 21. After installation, the hand-held mobile communications device 21 will have a mobile mail function.

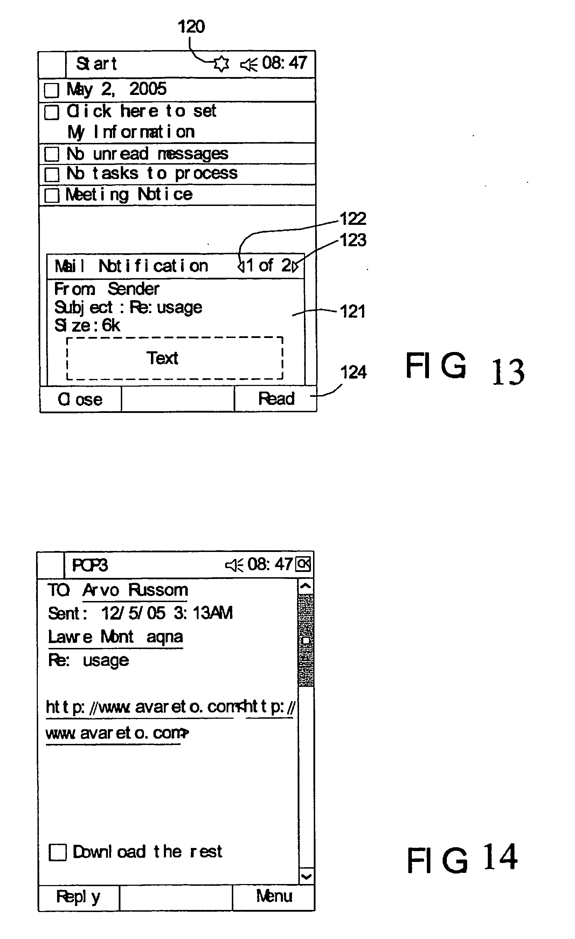

Therefore, referring to Figure 13, when the processing unit 24 of the hand-held mobile communications device 21 acquires partial content of the mail in the information server 31, filters the partial content according to the filtering rule, and downloads the mail that complies with the filtering result, an incoming notification will be generated to notify the user to check the hand-held mobile communications device 21. The incoming notification may be a ringing tone or vibration. Moreover, a visible incoming notification icon, such as a star-shaped icon 120, will be displayed on a home page screen of the hand-held mobile communications device 21 as shown in Figure 13. The user can customize or edit the form of the incoming notification as well as edit the icon 120. Therefore, when the user clicks on the star-shaped icon 120, a message window 121 will open at the lower part of the home page screen to display a mail notification message, which includes the sender of the mail, the subject of the mail, and the size of the mail. At the same time, a "Read" option 124 is shown at the bottom of the home page screen to allow the user to read the text of the mail upon clicking the "Read" option 124. Furthermore, when there are several notification messages from the hand-held mobile communications device 21, the number of the notification messages will be shown at the right upper corner of the message window 121, and left and right arrows 122, 123 are provided to allow the user to choose to read the notification messages of interest.

In addition, the message window 121 may be a customized message window that allows the user to edit settings of the message window.

Furthermore, aside from being configured to send a notification in advance, the processing unit 24 of the hand-held mobile communications device 21 may also be set to automatically display the text (content) of the mail, including the sender, the subject, and the size of the mail, upon obtaining mail that complies with the filtering rules according to the filtering result.

In addition, since the processing unit 24 downloads the text of the mail in whole or in part (depending on the size of the mail) when downloading the mail, in case the mail is not downloaded in its entirety or there is an attachment to the mail, referring to Figure 14, when the content of the mail is being displayed on the display screen of the hand-held mobile communications device 21, a "Download the Rest" option will appear at the bottom of the screen to allow the user to choose to download the rest of the content of the mail.

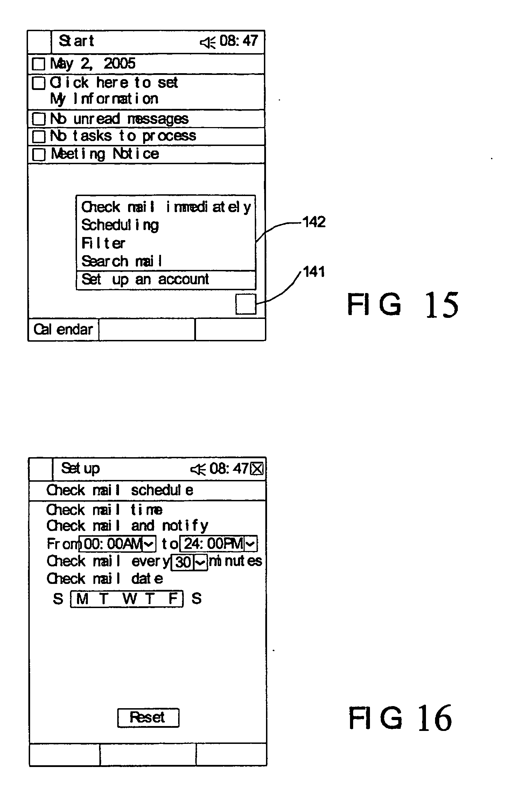

Referring to Figure 15, a virtual button 141 is further provided at a lower right corner of the home page screen of the hand-held mobile communications device 21. Upon clicking the virtual button 141, a menu 142 displaying several choices including "Check Mail Immediately," "Scheduling," "Filter," "Search Mail," and "Set Up Account" is shown. When the user clicks "Check Mail Immediately," the processing unit 24 will be activated to search the information server 31 for any new mail so as to acquire partial content of the newmail for filtering and so as to download the mail that complies with the filtering rule according to the filtering result, and to display the search results, as shown in Figure 13. When the "Scheduling" option is clicked, the display screen of the hand-held mobile communications device 21 will display a "Set Up" page, as shown in Figure 16, and the user can set the mail checking time of the processing unit 24 on the "Set Up" page to enable the application program to activate the processing unit 24 to search for mail data in the information server 31 at preset times according to the time setting.

Furthermore, to ensure the accuracy of the date and time for the processing unit 24 to perform data searches, the hand-held mobile communications device 21 can also be automatically connected to a clock server on the Internet at predetermined times so as to permit automatic calibration of the time of the real time clock 25.

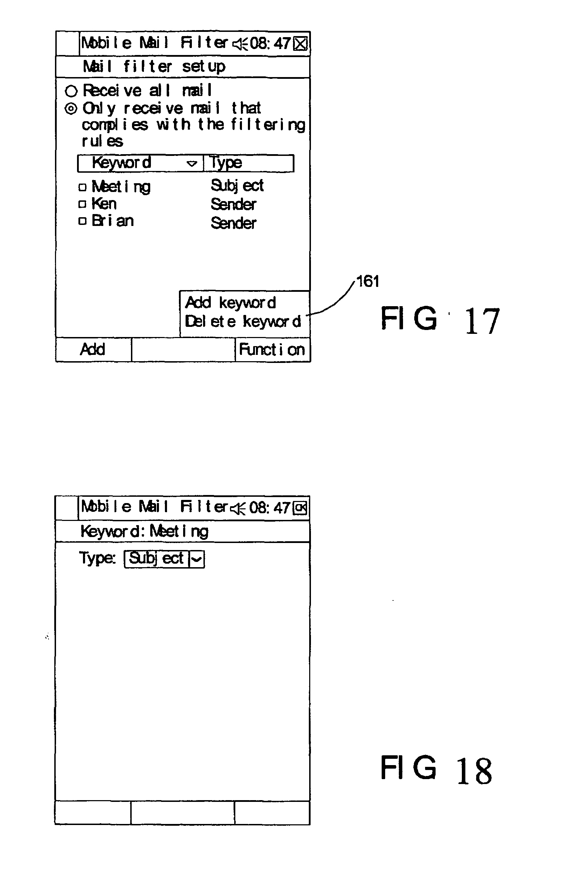

When the user chooses the "Filter" option of the menu 142 in the screen of Figure 15, a screen entitled "Mobile Mail Filter" as shown in Figure 17 will appear, showing the original filtering rule settings, with a menu 161 containing options of "Add Keywords" and "Delete Keywords" to allow the user to choose to add or delete a keyword to be searched, as shown in Figure 18.

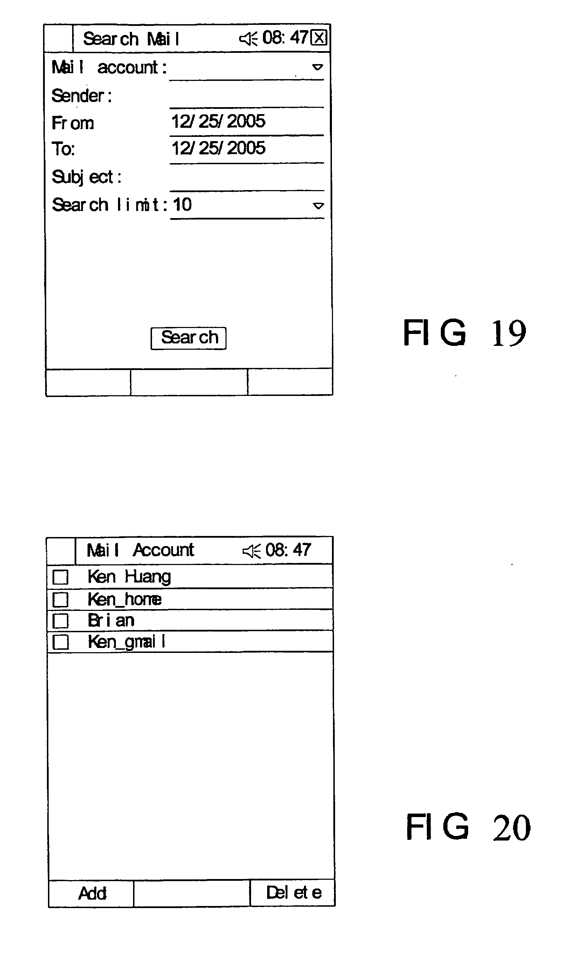

When the user chooses the "Search Mail" option of the menu 142 in the screen of Figure 15, a "Search Mail" screen as shown in Figure 19 will pop up to allow the user to enter search parameters, e. g. , mail account, sender, time period, subject, etc. The processing unit 24 of the hand-held mobile communications device 21 will immediately access the information server 31 to search for e-mail based on the search parameters, and display the search results, as shown in Figure 13.

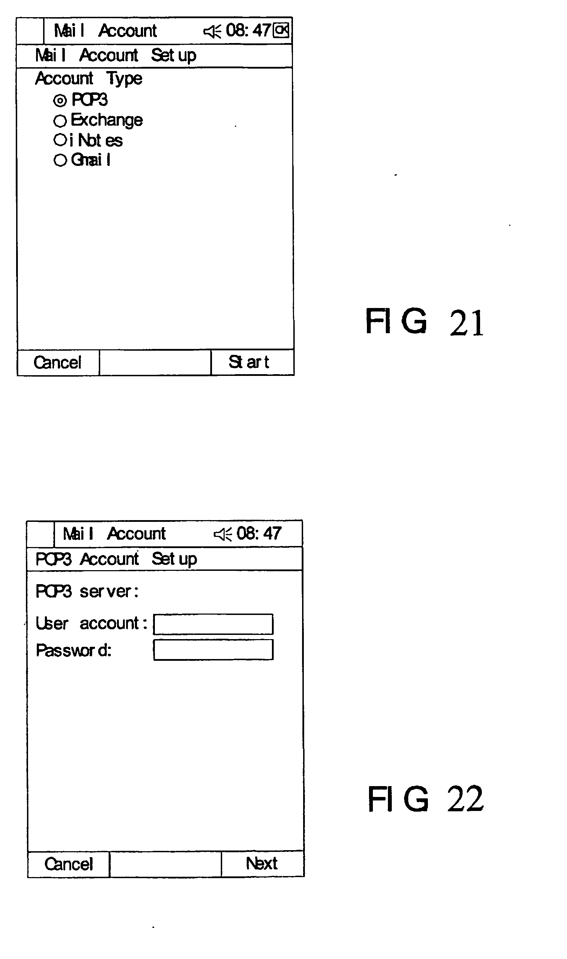

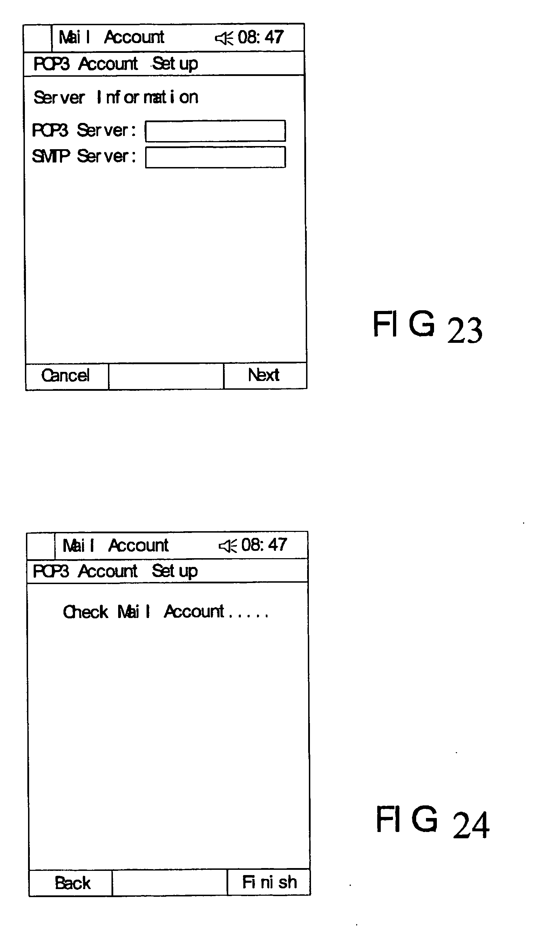

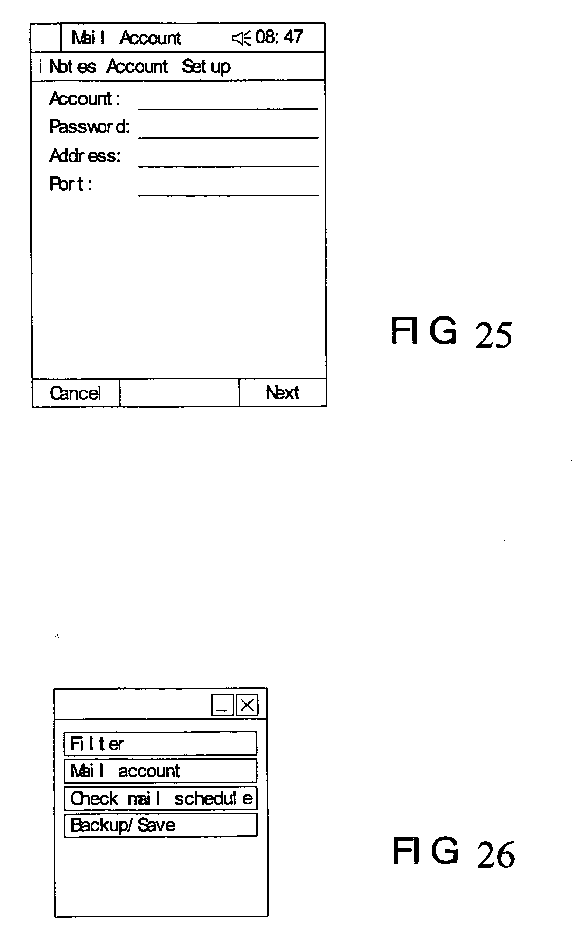

When the "Set up an account" option of the menu 142 in the screen of Figure 15 is chosen, a screen entitled "Mail Account" as shown in Figure 20 will appear, showing the currently set mail accounts. At the same time, "Add" and "Delete" options are provided at the bottom of the screen to allow the user to choose to add or delete a mail account. When the user chooses the "Add" option, a screen entitled "Mail Account Settings" as shown in Figure 21 will appear to allow the user to select the type of account, e.g., POP3, Exchange, iNotes, or Gmail. If the type of account selected by the user is POP3 or Gmail, windows such as those respectively shown in Figures 22 and 23 will appear in sequence to allow the user to set relevant information, e.g., to enter the user account number, password, server address, etc. Then, a screen as shown in Figure 24 will appear to confirm the data inputted by the user so as to add a new account. On the other hand, if the type of account selected by the user is Exchange or iNotes, a window as shown in Figure 25 will appear to allow the user to enter relevant information, and a checking procedure as illustrated in Figure 24 is performed to add a new mail account.

After the hand-held mobile communications device 21 has undergone the initialization procedure on first use, if the user wants to change the settings of the hand-held mobile communications device 21 through the personal computer 32, the hand-held mobile communications device 21 is connected to the personal computer 32, and the personal computer 32 will display a menu (see Figure 26) including the options "Filter," "Mail Account," "Check Mail Schedule, " and "Backup/Save" for the user to choose. The process for setting the "Filter, " the "Mail Account, " and the "Check Mail Schedule" is the same as that described heretofore (see Figures 17-18, Figures 20-25, and Figure 16), and will not be discussed further herein.

The "Backup/Save" option allows the user to store the setup data in the personal computer 32, or, in case of damage to the original setup data in the hand-held mobile communications device 21, to use the backup copy of the setup data stored in the personal computer 32 to replace the damaged setup data in the hand-held mobile communications device 21.

In addition, the hand-held mobile communications device 21 of this embodiment not only can screen e-mail, it can also screen web page information provided by the information server 31. The information server 31 referred to in this case is a web server which can supply articles published in different blogs, or news information provided by different websites (e.g., Yahoo news).

In the same manner as that described hereinabove, the processing unit 24 of the hand-held mobile communications device 21 can go to the information server 31 at predetermined times to acquire partial web page content of web page information. That is, the hand-held mobile communications device 21 can send requests to the information server 31 at predetermined times for transmission of partial content of web page information received thereby within a certain period of time. For instance, the hand-held mobile communications device 21 inquires the information server 31 at 2:00 p.m. about whether new web page information was received after 1:30 p.m. In the affirmative, partial content of web page information received between 1:30 p.m. and 2:00 p.m. is downloaded. After half an hour, i.e., at 2:30 p.m., the hand-held mobile communications device 21 further inquires the information server 31 about receipt of new web page information after 2: 00 p.m. In the affirmative, the partial content of the web page information received between 2:00 p.m. and 2:30 p.m. is downloaded. Subsequently, in a manner similar to that described above, the hand-held mobile communications device 21 filters the downloaded partial content of the web page information according to the filtering rule (keywords relating to web page source, subject, text, etc.) set in the filter of the processing unit 24 so as to download the web page information complying with the filtering rule (i.e., of interest to the user) according to the filtering result, and issues notifications to alert the user to read the filtered web page information or directly displays the web page information of interest to the user for the user to browse the information provided on the web page through a hyperlink.

In this embodiment, by making a preliminary screening setting in the information server through the hand-held mobile communications device 21 to eliminate old information in the information server and to acquire new information, and by setting a filtering rule in the hand-held mobile communications device 21 so that the hand-held mobile communications device 21 can first acquire partial content of the new information, filter the partial content according to the filtering rule set by the user and download the full information that complies with the filtering rule in the information server according to the filtering result, and then issue a notification to alert the user to read the filtered information, the user will not receive unwanted information through the hand-held mobile communications device 21, and, as acquisition of the information does not need to go through a third party, no additional telecommunications service fees are required. Besides, the integrity and confidentiality of the information can be ensured. Thus, the intended effect and object of this invention can be achieved.

## Claims

1. A method for acquiring information adapted to be implemented in a hand-held mobile communications device (21) so as to access information in a remote information server (31) through the Internet, said method comprising:
(A) acquiring partial content of information from the information server (31) in the mobile communications device (21) at predetermined times;
(B) filtering the acquired partial content in the mobile communications device (21) according to a filtering rule; and
(C) according to the filtering result, downloading information in the mobile communications device (21) from the information server (31), which information complies with the filtering rule, and according to a user setting, displaying one of the information that complies with the filtering rule and a notification message relating to the information that complies with the filtering rule.

2. The method of claim 1, wherein the information server (31) is a mail server, the information is electronic mail stored temporarily in the mail server, and the partial content is one of sender, subject, and partial text of the electronic mail.

3. The method of claim 2, wherein the filtering rule defines search and filtering parameters of at least one keyword in the partial content of the electronic mail.

4. The method of claim 1, wherein the hand-held mobile communications device (21) is provided with an identifier database for recording unique identifiers of electronic mail, and step (A) includes:
(A0) requesting the mail server to report a total electronic mail number;
(A1) setting a parameter N=1;
(A2) enabling the mail server to send a unique identifier of a last Nth electronic mail;
(A3) inspecting whether the unique identifier of the last Nth electronic mail is stored in the identifier database, downloading partial content of the last Nth electronic mail if the unique identifier thereof is not present, and setting N=N+1; and
(A4) repeating steps (A2) and (A3) until presence of the unique identifier in the identifier database is inspected.

5. The method of claim 2, wherein step (A) includes requesting the mail server to transmit at predetermined times the total electronic mail number received within a predetermined period of time counting back from the time the request was received.

6. The method of any of the preceding Claims, wherein the information server (31) is a web server, the information is web page information stored temporarily in the web server, and the partial content is partial web page content stored temporarily in the web server, the partial web page content being filtered according to the filtering rule in step (B).

7. The method of claim 6, wherein the partial web page content includes one of a source, an author, a subject, and text of the web page, and the filtering rule in step (B) defines search parameters of at least one keyword in the partial web page content.

8. The method of claim 6 or 7, wherein, in step (A), the web server is requested to transmit at predetermined times the partial web page content of web pages received within a predetermined period counting back from the time a request was received.

9. The method of claim 1, wherein, in step (C), when the notification message is displayed according to the user setting, and the notification message is accompanied by an incoming notification to alert the user to check the notification message.

10. The method of Claim 9, wherein the incoming notification is in the form of one of a ringing tone, vibrations, and a visible signal, and the form of the incoming notification is a customized form set by the user.

11. A hand-held mobile communications device (21) adapted to access information in a remote information server (31) through the Internet, said hand-held mobile communications device comprising:
a communications unit (23) for communicating with the information server (31); and
a processing unit (24) for acquiring partial content of information from the information server (31) at predetermined times through said communications unit, for filtering the acquired partial content according to a filtering rule, for downloading information from the information server that complies with the filtering rule according to the filtering result, and for selectively displaying one of the information that complies with the filtering rule and a notification message relating to the information that complies with the filtering rule according to a user setting.

12. The hand-held mobile communications device (21) of claim 11, wherein said communications unit (23) supports at least one wireless communications protocol selected from the group comprising GPRS, WCDMA, CDMA2000 and WI-FI.

13. The hand-held mobile communications device (21) of Claim 12, wherein said processing unit (24) is loaded with an operating system capable of accessing the information in the information server (31) through said communications unit (23).

14. The hand-held mobile communications device (21) of any of Claims 11 - 13, further comprising a memory unit (26) for storing temporarily the partial content acquired by said processing unit (24) and the information that complies with the filtering rule.

15. The hand-held mobile communications device (21) of any of Claims 11 - 14, wherein the information server (31) is a mail server, the information is electronic mail stored temporarily in the mail server, the partial content is one of sender, subject, and partial text of the electronic mail, and the memory unit (26) is provided with an identifier database for recording unique identifiers of electronic mail, said processing unit (24) executing the following steps when acquiring the partial content of the electronic mail from the mail server:
(A0) requesting the mail server to report a total electronic mail number;
(A1) setting a parameter N=1;
(A2) enabling the mail server to send a unique identifier of a last Nth electronic mail;
(A3) inspecting whether the unique identifier of the last Nth electronic mail is stored in the identifier database, downloading partial content of the last Nth electronic mail if the unique identifier thereof is not present, and setting N=N+1; and
(A4) repeating steps (A2) and (A3) until presence of the unique identifier in the identifier database is inspected.

16. The hand-held mobile communications device (21) of any of Claims 11 - 15, wherein the information server (31) is a mail server, the information is electronic mail stored temporarily in the mail server, the partial content is one of sender, subject, and partial text of the electronic mail, and said processing unit (24) requests the mail server to transmit at predetermined times the total electronic mail number received within a predetermined period of time counting back from the time the request was received.

17. The hand-held mobile communications device (21) of any of Claims 11 - 15,wherein the information server (31) is a web server, the information is web page information stored temporarily in the web server, the partial content is partial web page content stored temporarily in the web server, and said processing unit (24) requests the web server to transmit at predetermined times the partial web page content of web pages received within a predetermined period counting back from the time a request was received.

18. The hand-held mobile communications device (21) of any of Claims 11 - 17, further comprising a real time clock (25) to allow for setting of times for said processing unit (24)to search the information in the information server (31) such that said processing unit (24) can be activated at the predetermined times to search the information in the information server (31).

19. The hand-held mobile communications device (21) of Claim 18, further comprising means for calibrating automatically the time of said real time clock (25) through the Internet so as to ensure accuracy of the times for said processing unit (24) to search the information in the information server (31).

20. The hand-held mobile communications device (21) of any of Claims 11 - 19, further comprising a display screen, said processing unit displaying one of the information complying with the filtering rule and the notification message relating to the information complying with the filtering rule on said display screen according to the user setting.

21. The hand-held mobile communications device (21) of Claim 20, wherein said processing unit (24) generates an incoming notification concurrently with the displaying of the notification message on said display screen so as to alert the user to check the notification message.

22. The hand-held mobile communications device (21) of Claim 21, wherein the notification message is displayed on a home page screen of said display screen in the form of a message window (121), the message window (121) displaying source, subject and size of the information complying with the filtering rule, the home page screen further providing a "Read" option (124) to allow the user to choose to display contents of the information related to the notification message.

23. The hand-held mobile communications device (21) of any of Claims 11 - 22, wherein said processing unit (24) shows the source, subject and size of the information concurrent with display of the information complying with the filtering rule according to the user setting.

## Patentansprüche

1. Verfahren zum Übernehmen einer Information, das so ausgelegt ist, dass dieses in eine tragbare mobile Kommunikationseinrichtung (21) implementiert werden kann, um so über das Internet auf Information in einem entfernten Informationsserver (31) zugreifen zu können, wobei das Verfahren umfasst:
(A) Übernehmen eines Teilinhalts der Information vom Informationsserver (31) in die mobile Kommunikationseinrichtung (21) zu vorbestimmten Zeiten;
(B) Filtern des übernommenen Teilinhalts in der mobilen Kommunikationseinrichtung (21) gemäß einer Filterregel; und
(C) gemäß dem Filterergebnis, Herunterladen von Information in die mobile Kommunikationseinrichtung (21) von dem Informationsserver (31), wobei die Information der Filterregel entspricht, und gemäß einer Benutzereinstellung, Anzeigen einer der Informationen, die der Filterregel entspricht und einer Ankündigungsmitteilung, die sich auf die Information bezieht, welche der Filterregel entspricht.

2. Verfahren nach Anspruch 1, in welchem der Informationsserver (31) ein Mailserver ist, wobei die Information eine elektronische Mail ist, die temporär in dem Mailserver gespeichert wird, und der Teilinhalt einer ist von Sender, Betreff und partieller Text der elektronischen Mail.

3. Verfahren nach Anspruch 2, in welchem die Filterregel Such- und Filterparameter wenigstens eines Schlüsselworts in dem partiellen Inhalt der elektronischen Mail definiert.

4. Verfahren nach Anspruch 1, in welchem die tragbare mobile Kommunikationseinrichtung (21) mit einer Kennzeichendatenbank zum Aufzeichnen einzigartiger Kennzeichen der elektronischen Mail versehen ist, und Schritt (A) beinhaltet:
(A0) Auffordern des Mailservers, eine gesamte elektronische Mailanzahl zu berichten;
(A1) Setzen eines Parameters N=1;
(A2) Ermöglichen des Mailservers, ein einzigartiges Kennzeichen einer letzten Nten elektronischen Mail zu senden;
(A3) Prüfen, ob das einzigartige Kennzeichen der letzten Nten elektronischen Mail in der Kennzeichendatenbank gespeichert ist, Herunterladen eines partiellen Inhalts der letzten Nten elektronischen Mail, falls das einzigartige Kennzeichen derselben nicht vorhanden ist, und Setzen N=N+1; und
(A4) Wiederholen der Schritte (A2) und (A3) bis ein Vorhandensein des einzigartigen Kennzeichens in der Kennzeichendatenbank festgestellt wird.

5. Verfahren nach Anspruch 2, in welchem Schritt (A) ein Auffordern an den Mailserver umfasst, zu vorbestimmten Zeiten die gesamte elektronische Mailanzahl, die innerhalb einer vorbestimmten Zeitspanne empfangen wurde, zurückzählend von der Zeit, zu welcher die Aufforderung empfangen wurde, zu übertragen.

6. Verfahren nach einem der vorhergehenden Ansprüche, in welchem der Informationsserver (31) ein Webserver ist, wobei die Information eine Webseiteninformation ist, die temporär in dem Webserver gespeichert wurde und der Teilinhalt ein partieller Webseiteninhalt ist, der temporär in dem Webserver gespeichert wurde, wobei der partielle Webseiteninhalt gemäß der Filterregel in Schritt (B) gefiltert wird.

7. Verfahren nach Anspruch 6, in welchem der partielle Webseiteninhalt einen aus der Quelle, Autor, Betreff und Text der Webseite enthält und die Filterregel im Schritt (B) Suchparameter von wenigstens einem Schlüsselwort in dem partiellen Webseiteninhalt definiert.

8. Verfahren nach Anspruch 6 oder 7, in welchem im Schritt (A) der Webserver aufgefordert wird, zur vorbestimmten Zeiten den partiellen Webseiteninhalt von Webseiten, die innerhalb einer vorbestimmten Zeitspanne empfangen werden, zurückzählend von der Zeit, zu welcher die Aufforderung empfangen wurde, zu übertragen.

9. Verfahren nach Anspruch 1, in welchem im Schritt (C), wenn die Ankündigungsmitteilung gemäß der Benutzereinstellung angezeigt wird und die Ankündigungsmitteilung durch eine hereinkommende Ankündigung begleitet wird, den Benutzer zu alarmieren, die Ankündigungsmitteilung zu prüfen.

10. Verfahren nach Anspruch 9, in welchem die einkommende Ankündigung in Form eines von einem Klingelton, Vibrationen und optischen Signal ist und die Form der einkommenden Ankündigung eine durch den Benutzer eingestellte individuelle Form ist.

11. Tragbare mobile Kommunikationsvorrichtung (21), die so ausgebildet ist, dass diese über das Internet auf Information in einem entfernten Informationsserver (31) zugreift, wobei die tragbare mobile Kommunikationsvorrichtung umfasst:
eine Kommunikationseinheit (23) zum Kommunizieren mit dem Informationsserver (31); und
eine Verarbeitungseinheit (24) zum Übernehmen eines Teilinhalts von Information vom Informationsserver (31) zu vorbestimmten Zeiten über die Kommunikationseinheit, zum Filtern des übernommenen Teilinhalts gemäß einer Filterregel, zum Herunterladen von Information vom Informationsserver, die der Filterregel entspricht, gemäß dem Filterergebnis, und zum selektiven Anzeigen einer der Information, die der Filterregel und einer Ankündigungsmitteilung mit Bezug auf die Information, die der Filterregel entspricht, gemäß einer Benutzereinstellung.

12. Tragbare mobile Kommunikationsvorrichtung (21) nach Anspruch 11, in welcher die Kommunikationseinheit (23) wenigstens ein drahtloses Kommunikationsprotokoll unterstützt, ausgewählt aus der Gruppe umfassend GPRS, WCDMA, CDMA2000 und WI-FI.

13. Tragbare mobile Kommunikationsvorrichtung (21) nach Anspruch 12, in welcher die Verarbeitungseinheit (24) mit einem Betriebssystem geladen ist, das in der Lage ist, auf die Information in den Informationsserver (31) über die Kommunikationseinheit (23) zuzugreifen.

14. Tragbare mobile Kommunikationsvorrichtung (21) nach einem der Ansprüche 11 bis 13, ferner mit einer Speichereinheit (26) zum temporären Speichern des Teilinhalts, der durch die Verarbeitungseinheit (24) übernommen wurde, und der Information, die der Filterregel entspricht.

15. Tragbare mobile Kommunikationsvorrichtung (21) nach einem der Ansprüche 11 bis 14, in welcher der Informationsserver (31) ein Mailserver ist, die Information eine temporär in dem Mailserver gespeicherter elektronische Mail ist, der Teilinhalt eines ist von Sender, Betreff und partieller Text der elektronischen Mail und die Speichereinheit (26) mit einer Kennzeichendatenbank zum Aufzeichnen einzigartiger Kennzeichen der elektronischen Mail versehen ist, wobei die Verarbeitungseinheit (24) die folgenden Schritte ausführt, wenn der Teilinhalt der elektronischen Mail vom Mailserver übernommen wird:
(A0) Auffordern des Mailservers, eine gesamte elektronische Mailanzahl zu berichten;
(A1) Einstellen eines Parameter N=1;
(A2) den Mailserver in die Lage versetzen, ein einzigartiges Kennzeichen wenigstens einer letzten Nten elektronischen Mail zu senden;
(A3) Prüfen, ob das einzigartige Kennzeichen der letzten Nten elektronischen Mail in der Kennzeichendatenbank gespeichert ist, herunterladen des Teilinhalts der letzten Nten elektronischen Mail, falls das einzigartige Kennzeichen derselben nicht vorhanden ist und Einstellen N=N+1; und
(A4) Wiederholen der Schritte (A2) und (A3) bis das Vorhandensein des einzigartigen Kennzeichens in der Kennzeichendatenbank festgestellt wird.

16. Tragbare mobile Kommunikationsvorrichtung (21) nach einem der Ansprüche 11 bis 15, in welcher der Informationsserver (31) ein Mailserver ist, die Information eine temporär in dem Mailserver gespeicherte elektronische Mail ist, der Teilinhalt eines ist von Sender, Betreff und partieller Text der elektronischen Mail, und die Verarbeitungseinheit (24) den Mailserver auffordert, zu bestimmten Zeiten die gesamte elektronische Mailanzahl, die innerhalb einer vorbestimmten Zeitspanne empfangen wird, zurückzählend von der Zeit, zu welcher die Aufforderung erhalten wurde, zu übertragen.

17. Tragbare mobile Kommunikationsvorrichtung (21) nach einem der Ansprüche 11 bis 15, in welcher der Informationsserver (31) ein Webserver ist, die Information eine temporär in dem Webserver gespeicherte Webseiteninformation ist, der Teilinhalt ein partieller Webseiteninhalt ist, der temporär in dem Webserver gespeichert wird, und die Verarbeitungseinheit (24) den Webserver auffordert, zu vorbestimmten Zeiten den partiellen Webseiteninhalt der innerhalb einer vorbestimmten Zeitdauer empfangenen Webseiten, zurückzählend von der Zeit, zu der eine Aufforderung empfangen wurde, zu übertragen.

18. Tragbare mobile Kommunikationsvorrichtung (21) nach einem der Ansprüche 11 bis 17, ferner mit einer Echtzeituhr (25), um ein Einstellen von Zeiten für die Verarbeitungseinheit (24) zu ermöglichen, so dass die Information in dem Informationsserver (31) derart gesucht wird, dass die Verarbeitungseinheit (24) zu vorbestimmten Zeiten aktiviert werden kann, um die Information in dem Informationsserver zu suchen.

19. Tragbare mobile Kommunikationsvorrichtung (21) nach Anspruch 18, ferner mit Mitteln zum automatischen Kalibrieren der Zeit der Echtzeituhr (25) über das Internet, um so eine Genauigkeit der Zeiten sicherzustellen, zu denen die Verarbeitungseinheit (24) die Information in dem Informationsserver (31) suchen soll.

20. Tragbare mobile Kommunikationsvorrichtung (21) nach einem der Ansprüche 11 bis 19, ferner mit einem Anzeigeschirm, wobei die Verarbeitungseinheit eine der Informationen, die der Filterregel entsprechen, und die Ankündigungsmitteilung, die sich auf die Information bezieht, die der Filterregel entspricht, auf dem Anzeigeschirm gemäß der Benutzereinstellung anzeigt.

21. Tragbare mobile Kommunikationsvorrichtung (21) nach Anspruch 20, in welcher die Verarbeitungseinheit (24) eine eingehende Ankündigung gleichzeitig zu der Anzeige der Ankündigungsmitteilung auf dem Anzeigeschirm erzeugt, um so den Benutzer darauf aufmerksam zu machen, die Ankündigungsmitteilung zu prüfen.

22. Tragbare mobile Kommunikationsvorrichtung (21) nach Anspruch 21, in welcher die Ankündigungsmitteilung auf einem Homepage-Schirm des Anzeigeschirms in Form eines Mitteilungsfensters (121) angezeigt wird, wobei das Mitteilungsfenster (121) eine Quelle, einen Betreff und eine Größe der Information entsprechend der Filterregel anzeigt, wobei der Homepage-Schirm ferner eine "Lese" Option (124) bereitstellt, um dem Benutzer zu erlauben, die Anzeigeinhalte der Information mit Bezug auf die Ankündigungsmitteilung zu wählen.

23. Tragbare mobile Kommunikationsvorrichtung (21) nach einem der Ansprüche 11 bis 22, in welcher die Verarbeitungseinheit (24) gemäß der Benutzereinstellung die Quelle, den Betreff und die Größe der Information gleichzeitig zu der Anzeige der Information, die der Filterregel entspricht, zeigt.

## Revendications

1. Procédé d'acquisition d'informations apte à être mis en oeuvre dans un dispositif de communication mobile de poche (21), en vue d'accéder à des informations dans un serveur d'informations distant (31) par le biais d'Internet, ledit procédé comprenant les étapes ci-dessous consistant à :
(A) acquérir du contenu d'informations partiel à partir du serveur d'informations (31) dans le dispositif de communication mobile (21), à des instants prédéterminés ;
(B) filtrer le contenu partiel acquis dans le dispositif de communication mobile (21) selon une règle de filtrage ; et
(C) selon le résultat du filtrage, télécharger des informations dans le dispositif de communication mobile (21) à partir du serveur d'informations (31), lesquelles informations sont conformes à la règle de filtrage, et, selon un paramètre d'utilisateur, afficher l'une des informations conformes à la règle de filtrage et un message de notification connexe à celle des informations qui est conforme à la règle de filtrage.

2. Procédé selon la revendication 1, dans lequel le serveur d'informations (31) est un serveur de courrier électronique, les informations représentent du courrier électronique stocké temporairement dans le serveur de courrier électronique, et le contenu partiel est l'un parmi les éléments suivants : expéditeur, objet et texte partiel du courrier électronique.

3. Procédé selon la revendication 2, dans lequel la règle de filtrage définit des paramètres de recherche et de filtrage d'au moins un mot clé dans le contenu partiel du courrier électronique.

4. Procédé selon la revendication 1, dans lequel le dispositif de communication mobile de poche (21) est doté d'une base de données d'identifiants destinée à enregistrer des identifiants uniques de courrier électronique, et l'étape (A) comprend les étapes ci-dessous consistant à :
(A0) demander au serveur de courrier électronique de signaler un nombre total de courriers électroniques ;
(A1) définir un paramètre N = 1 ;
(A2) permettre au serveur de courrier électronique d'envoyer un identifiant unique d'un dernier Nième courrier électronique ;
(A3) vérifier si l'identifiant unique du dernier Nième courrier électronique est stocké dans la base de données d'identifiants, télécharger le contenu partiel du dernier Nième courrier électronique si son identifiant unique est absent, et définir N = N +1 ; et
(A4) répéter les étapes (A2) et (A3) jusqu'à ce que la présence de l'identifiant unique dans la base de données d'identifiants soit vérifiée.

5. Procédé selon la revendication 2, dans lequel l'étape (A) comprend l'étape consistant à demander au serveur de courrier électronique de transmettre, à des instants prédéterminés, le nombre total de courriers électroniques reçus au cours d'une période de temps prédéterminée, en comptant à rebours à partir du moment où la demande a été reçue.

6. Procédé selon l'une quelconque des revendications précédentes, dans lequel le serveur d'informations (31) est un serveur web, les informations sont des informations de page web stockées temporairement dans le serveur web, et le contenu partiel représente du contenu de page web partiel stocké temporairement dans le serveur web, le contenu de page web partiel étant filtré selon la règle de filtrage de l'étape (B).

7. Procédé selon la revendication 6, dans lequel le contenu de page web partiel comprend l'un des éléments parmi une source, un auteur, un objet, et le texte de la page Web, et la règle de filtrage de l'étape (B) définit les paramètres de recherche d'au moins un mot clé dans le contenu de page web partiel.

8. Procédé selon la revendication 6 ou 7, dans lequel, au cours de l'étape (A), il est demandé au serveur web de transmettre, à des instants prédéterminés, le contenu de page web partiel de pages web reçues au cours d'une période prédéterminée, en comptant à rebours à partir du moment où une demande a été reçue.

9. Procédé selon la revendication 1, dans lequel, au cours de l'étape (C), lorsque le message de notification est affiché selon le paramètre d'utilisateur, le message de notification est accompagné d'une notification entrante visant à alerter l'utilisateur afin qu'il vérifie le message de notification.

10. Procédé selon la revendication 9, dans lequel la notification entrante est de l'une des formes parmi une sonnerie, des vibrations et un signal visible, et la forme de la notification entrante est une forme personnalisée définie par l'utilisateur.

11. Dispositif de communication mobile de poche (21) apte à accéder à des informations dans un serveur d'informations distant (31) par le biais d'Internet, ledit dispositif de communication mobile de poche comprenant :
une unité de communication (23) pour communiquer avec le serveur d'informations (31) ; et
une unité de traitement (24) pour acquérir du contenu d'informations partiel à partir du serveur d'informations (31) à des instants prédéterminés via ladite unité de communication, pour filtrer le contenu partiel acquis selon une règle de filtrage, pour télécharger des informations, à partir du serveur d'informations, conformes à la règle de filtrage, selon le résultat de filtrage, et pour afficher de manière sélective l'une des informations conformes à la règle de filtrage et un message de notification connexe à celle des informations qui est conforme à la règle de filtrage selon un paramètre d'utilisateur.

12. Dispositif de communication mobile de poche (21) selon la revendication 11, dans lequel ladite unité de communication (23) prend en charge au moins un protocole de communication sans fil sélectionné dans le groupe comprenant : GPRS, WCDMA, CDMA2000 et WI-FI.

13. Dispositif de communication mobile de poche (21) selon la revendication 12, dans lequel ladite unité de traitement (24) est dotée d'un système d'exploitation apte à accéder aux informations dans le serveur d'informations (31) par le biais de ladite unité de communication (23).

14. Dispositif de communication mobile de poche (21) selon l'une quelconque des revendications 11 à 13, comprenant en outre une unité de mémoire (26) pour stocker temporairement le contenu partiel acquis par ladite unité de traitement (24) et les informations conformes à la règle de filtrage.

15. Dispositif de communication mobile de poche (21) selon l'une quelconque des revendications 11 à 14, dans lequel le serveur d'informations (31) est un serveur de courrier électronique, les informations représentent du courrier électronique stocké temporairement dans le serveur de courrier électronique, le contenu partiel est l'un des éléments parmi un expéditeur, un objet et un texte partiel du courrier électronique, et l'unité de mémoire (26) est dotée d'une base de données d'identifiants destinée à enregistrer des identifiants uniques de courrier électronique, ladite unité de traitement (24) mettant en oeuvre les étapes ci-dessous, lors de l'acquisition du contenu partiel du courrier électronique à partir du serveur de courrier électronique, consistant à :
(A0) demander au serveur de courrier électronique de signaler un nombre total de courriers électroniques ;
(A1) définir un paramètre N = 1 ;
(A2) permettre au serveur de courrier électronique d'envoyer un identifiant unique d'un dernier Nième courrier électronique ;
(A3) vérifier si l'identifiant unique du dernier Nième courrier électronique est stocké dans la base de données d'identifiants, télécharger le contenu partiel du dernier Nième courrier électronique si son identifiant unique est absent, et définir N = N +1 ; et
(A4) répéter les étapes (A2) et (A3) jusqu'à ce que la présence de l'identifiant unique dans la base de données d'identifiants soit vérifiée.

16. Dispositif de communication mobile de poche (21) selon l'une quelconque des revendications 11 à 15, dans lequel le serveur d'informations (31) est un serveur de courrier électronique, les informations représentent du courrier électronique stocké temporairement dans le serveur de courrier électronique, le contenu partiel est l'un parmi les éléments suivants : expéditeur, objet et texte partiel du courrier électronique, et ladite unité de traitement (24) demande au serveur de courrier électronique de transmettre, à des instants prédéterminés, le nombre total de courriers électroniques reçus au cours d'une période de temps prédéterminée, en comptant à rebours à partir du moment où la demande a été reçue.

17. Dispositif de communication mobile de poche (21) selon l'une quelconque des revendications 11 à 15, dans lequel le serveur d'informations (31) est un serveur web, les informations sont des informations de page web stockées temporairement dans le serveur web, et le contenu partiel représente du contenu de page web partiel stocké temporairement dans le serveur web, et ladite unité de traitement (24) demande au serveur web de transmettre, à des instants prédéterminés, le contenu de page web partiel de pages web reçues au cours d'une période de temps prédéterminée, en comptant à rebours à partir du moment une demande a été reçue.

18. Dispositif de communication mobile de poche (21) selon l'une quelconque des revendications 11 à 17, comprenant en outre une horloge temps réel (25) destinée à permettre la définition d'instants où ladite unité de traitement (24) peut rechercher les informations dans le serveur d'informations (31), de sorte que ladite unité de traitement (24) peut être activée aux instants prédéterminés en vue de rechercher les informations dans le serveur d'informations (31).

19. Dispositif de communication mobile de poche (21) selon la revendication 18, comprenant en outre un moyen pour étalonner automatiquement l'heure de ladite horloge temps réel (25) par le biais d'Internet, afin de garantir l'exactitude temporelle où ladite unité de traitement (24) peut rechercher les informations dans le serveur d'informations (31).

20. Dispositif de communication mobile de poche (21) selon l'une quelconque des revendications 11 à 19, comprenant en outre un écran d'affichage, dans lequel ladite unité de traitement affiche l'une des informations conformes à la règle de filtrage et le message de notification connexe aux informations conformes à la règle de filtrage sur ledit écran d'affichage selon le paramètre d'utilisateur.

21. Dispositif de communication mobile de poche (21) selon la revendication 20, dans lequel ladite unité de traitement (24) génère une notification entrante, simultanément à l'affichage du message de notification sur ledit écran d'affichage, afin d'alerter l'utilisateur pour qu'il vérifie le message de notification.

22. Dispositif de communication mobile de poche (21) selon la revendication 21, dans lequel le message de notification est affiché sur un écran de page d'accueil dudit écran d'affichage, sous la forme d'une fenêtre de message (121), la fenêtre de message (121) affichant une source, un obj et et une taille des informations conformes à la règle de filtrage, l'écran de page d'accueil fournissant en outre une option « Lecture » (124) pour permettre à l'utilisateur de décider d'afficher le contenu des informations connexes au message de notification.

23. Dispositif de communication mobile de poche (21) selon l'une quelconque des revendications 11 à 22, dans lequel ladite unité de traitement (24) indique la source, l'objet et la taille des informations, simultanément à l'affichage des informations conformes à la règle de filtrage selon le paramètre d'utilisateur.
